# EUROPEAN PATENT APPLICATION

(11) **EP 4 020 293 A1**
(43) Date of publication of application: **29.06.2022**
(21) Application number: 21216866.0
(22) Date of filing: 22.12.2021
(51) Int. Cl.: G06F 21/62

(54) **SYSTEMS AND METHODS FOR IMAGE DATA MANAGEMENT**

(30) Priority: 22.12.2020 CN 202011528108; 28.12.2020 CN 202011582290
(71) Applicant: Wuhan United Imaging Healthcare Co., Ltd., WuHan, Hubei 430206 (CN)
(72) Inventor: Wang, Jingtian, Wuhan, 430206 (CN); Xiong, Hongyu, Wuhan, 430206 (CN)
(74) Representative: Wang, Bo

(57) **Abstract**

The present disclosure provides a data management system and method. The method may comprise obtaining, from a storage device, encrypted image data of a target subject and a key box associated with the encrypted image data, the key box being separated from the encrypted image data. The method may also comprise transmitting the key box to an authenticated terminal device. The method may also comprise receiving a master key from the authenticated terminal device, the master key being extracted from the key box on the authenticated terminal device. The method may further comprise generating target image data of the target subject by decrypting the encrypted image data using the master key.

## Description

### CROSS-REFERENCE TO RELATED APPLICATIONS

This application claims priority of Chinese Patent Application No. 202011528108X, filed on December 22, 2020, and Chinese Patent Application No. 2020115822907, filed on December 28, 2020, the contents of each of which are hereby incorporated by reference.

### TECHNICAL FIELD

The present disclosure generally relates to data management, and more particularly, to systems and methods for image data encryption and storage.

### BACKGROUND

At present, a volume of medical image data generated by scanning a subject, or a portion thereof, is increasing at a dramatical speed. Generally, such medical image data involves private information (e.g., health information) of a subject. Thus, it is desirable to develop a system and method for data encryption and storage in order to manage medical image data effectively and efficiently.

### SUMMARY

According to a first aspect of the present disclosure, a method is provided. The method may comprises obtaining, from a storage device, encrypted image data of a target subject and a key box associated with the encrypted image data, the key box being separated from the encrypted image data; transmitting the key box to an authenticated terminal device; receiving a master key from the authenticated terminal device, the master key being extracted from the key box on the authenticated terminal device; and generating target image data of the target subject by decrypting the encrypted image data using the master key.

In some embodiments, the method may further include obtaining the encrypted image data and the key box from an imaging device; and storing the encrypted image data and the key box in the storage device.

In some embodiments, the encrypted image data is generated by encrypting, using the master key, image data of the target subject on the imaging device.

In some embodiments, the method may further include generating a key pair according to an encryption algorithm, the key pair including a public key and a private key, wherein the key box is generated by encrypting the master key using the public key, and the master key is extracted from the key box on the authenticated terminal device using the private key.

In some embodiments, the public key is associated with registration information of the authenticated terminal device.

According to a second aspect of the present disclosure, a system is provided. The system may comprise at least one storage device including a set of instructions; and at least one processor configured to communicate with the at least one storage device, wherein the set of instructions, when executed by the processor, cause the at least one processor to perform operations including obtaining, from a storage device, encrypted image data of a target subject and a key box associated with the encrypted image data, the key box being separated from the encrypted image data; transmitting the key box to an authenticated terminal device; receiving a master key from the authenticated terminal device, the master key being extracted from the key box on the authenticated terminal device; and generating target image data of the target subject by decrypting the encrypted image data using the master key.

According to a third aspect of the present disclosure, a method is provided. The method may comprises obtaining image data and identification information of a subject; determining a mapping relationship between the image data and the identification information; and storing, in a storage device, the image data, the identification information, and the mapping relationship.

In some embodiments, the identification information of the subject includes one or more facial images of the subject.

In some embodiments, the one or more facial images of the subject are acquired during a time period of a scan for generating the image data.

In some embodiments, the determining a mapping relationship between the image data and the identification information includes extracting feature information of the subject from the identification information; and determining the mapping relationship between the image data and the identification information by combining the feature information with the image data.

In some embodiments, the determining the mapping relationship between the image data and the identification information by combining the feature information with the image data includes generating at least one key based on the feature information; generating at least one value based on the image data; determining a second mapping relationship between the at least one key and the at least one value; and designating the second mapping relationship as the mapping relationship between the image data and the identification information.

In some embodiments, the method may further include encrypting the image data of the subject using the identification information of the subject.

In some embodiments, the method may further include receiving an access request and target feature information extracted from target identification information; determining, in response to the access request, whether the target feature information matches the feature information of the subject; and retrieving, in response to determining that the target feature information matches the feature information of the subject, the image data of the subject from the storage device based on the feature information of the subject and the mapping relationship between the image data and the identification information.

In some embodiments, the method may further include decrypting the retrieved image data of the subject using the target identification information.

According to a second aspect of the present disclosure, a system is provided. The system may comprise at least one storage device including a set of instructions; and at least one processor configured to communicate with the at least one storage device, wherein the set of instructions, when executed by the processor, cause the at least one processor to perform operations including obtaining image data and identification information of a subject; determining a mapping relationship between the image data and the identification information; and storing, in a storage device, the image data, the identification information, and the mapping relationship.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting exemplary embodiments, in which like reference numerals represent similar structures throughout the several views of the drawings, and wherein:
FIG. 1 is a schematic diagram illustrating an exemplary data management system 100 according to some embodiments of the present disclosure;
FIG. 2 is a schematic diagram illustrating hardware and/or software components of an exemplary computing device 200 on which the processing device 120 may be implemented according to some embodiments of the present disclosure;
FIG. 3 is a schematic diagram illustrating hardware and/or software components of an exemplary mobile device 300 according to some embodiments of the present disclosure;
FIG. 4 is a block diagram illustrating an exemplary processing device according to some embodiments of the present disclosure;
FIG. 5 is a flowchart illustrating an exemplary process for managing image data according to some embodiments of the present disclosure;
FIG. 6 is a flowchart illustrating an exemplary process for encrypting image data of a subject according to some embodiments of the present disclosure;
FIG. 7 is a flowchart illustrating an exemplary process for generating a key pair according to some embodiments of the present disclosure;
FIG. 8 is a flowchart illustrating an exemplary process for authorizing an image viewer to view target image data according to some embodiments of the present disclosure;
FIG. 9 is a flowchart illustrating an exemplary process for storing image data of a subject according to some embodiments of the present disclosure;
FIG. 10 is a flowchart illustrating an exemplary process for determining a mapping relationship between image data and identification information of the subject according to some embodiments of the present disclosure;
FIG. 11 is a flowchart illustrating an exemplary process for retrieving target image data from a storage device according to some embodiments of the present disclosure;
FIG. 12 is a flowchart illustrating an exemplary process for retrieving target image data corresponding to target identification information from a storage device according to some embodiments of the present disclosure;
FIG. 13 is a flowchart illustrating an exemplary process for storing image data in a storage device according to some embodiments of the present disclosure;
FIG. 14 is a flowchart illustrating an exemplary process for retrieving target image data from a storage device according to some embodiments of the present disclosure; and
FIG. 15 is a flowchart illustrating an exemplary process for managing image data according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well known methods, procedures, systems, components, and/or circuitry have been described at a relatively high-level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but to be accorded the widest scope consistent with the claims.

It will be understood that the term "system," "unit," "module," and/or "block" used herein are one method to distinguish different components, elements, parts, section or assembly of different level in ascending order. However, the terms may be displaced by another expression if they may achieve the same purpose.

The flowcharts used in the present disclosure illustrate operations that systems implement according to some embodiments of the present disclosure. It is to be expressly understood the operations of the flowcharts may be implemented not in order. Conversely, the operations may be implemented in an inverted order, or simultaneously. Moreover, one or more other operations may be added to the flowcharts. One or more operations may be removed from the flowcharts.

Provided herein are systems and methods for image data management. The image data may be medical image data, which may be used for disease diagnosis, treatment, and/or research purposes. The image data may be generated by an imaging device. In some embodiments, the imaging device may include a single modality device and/or a multi-modality device. The term "modality" used herein broadly refers to an imaging or treatment method or technology that gathers, generates, processes, and/or analyzes imaging information of a subject or treatments the subject. The single modality device may include a positron emission tomography (PET) scanner, a computed tomography (CT) scanner, a magnetic resonance imaging (MRI) scanner, an ultrasound imaging scanner, an X-ray imaging scanner, an ultrasonography scanner, an optical coherence tomography (OCT) imaging scanner, an ultrasound (US) imaging scanner, an intravascular ultrasound (IVUS) imaging scanner, a near-infrared spectroscopy (NIRS) imaging scanner, or the like, or any combination thereof. The multi-modality device may include a positron emission tomography-computed tomography (PET-CT) scanner, a positron emission tomography-magnetic resonance imaging (PET-MR) scanner, a positron emission tomography-X-ray imaging (PET-X-ray) scanner, a single-photon emission computed tomography-magnetic resonance imaging (SPECT-MRI) scanner, an X-ray imaging-magnetic resonance imaging (X-ray-MRI) scanner, a digital subtraction angiography-magnetic resonance imaging (DSA-MRI) scanner, or the like, or any combination thereof.

In the present disclosure, the term "image data" refers to two-dimensional (2D) image data, three-dimensional (3D) image data, or four-dimensional (4D) image data. In some embodiments, the term "image data" refers to image data of a region (e.g., a region of interest (ROI)) of a subject. As described above, the image data may be PET image data, CT image data, MR image data, fluoroscopy image data, ultrasound image data, etc.

As used herein, a representation of a subject (e.g., a patient, or a portion thereof) in an image or image data may be referred to as the subject for brevity. For instance, a representation of an organ or tissue (e.g., the heart, the liver, a lung, etc., of a patient) in an image or image data may be referred to as the organ or tissue for brevity. An image or image data including a representation of a subject may be referred to as an image or image data of the subject or an image or image data including the subject for brevity. As used herein, an operation on a representation of a subject in an image or image data may be referred to as an operation on the subject for brevity. For instance, a segmentation of a portion of an image or image data including a representation of an organ or tissue (e.g., the heart, the liver, a lung, etc., of a patient) from the image or image data may be referred to as a segmentation of the organ or tissue for brevity.

According to an aspect of the present disclosure, encrypted image data of a target subject and a key box associated with the encrypted image data may be obtained by a processing device from a storage device. The key box may be separated from the encrypted image data. The key box may be transmitted to an authenticated terminal device, and a master key may be extracted from the key box on the authenticated terminal device. The master key may be transmitted to the processing device. Target image data of the target subject may be generated by decrypting the encrypted image data using the master key. The target subject (e.g., a target patient) may view the target image data safely, and an image viewer (e.g., a doctor, a technician, etc.,) may request an authorization from the target subject before the image viewer can view the target image data, thereby preventing an unauthorized access of the target image data, which in turn may improve the safety of the storage and transmission of the target image data of the target subject, realize an effective protection of the privacy of the target subject, and/or avoid a breach of private information of the target subject. In comparison with conventional ways (e.g., using a digital signature, a digital certificate, and at least one key) to encrypt image data, the use of the master key and the key box may be much easier and more efficient.

According to an aspect of the present disclosure, image data and identification information of a subject may be obtained. A mapping relationship between the image data and the identification information may be determined. The image data, the identification information, and the mapping relationship may be stored together in a storage device. Image data, identification information, and a corresponding mapping relationship of each of a plurality of subjects may be stored in the storage device in a similar way. When a target subject needs to retrieve target image data of the target subject, the target image data may be obtained by verifying identification information (e.g., a facial image) of the target subject, thereby preventing an unauthorized access of the target image data, which in turn may improve the safety of the storage and transmission of the target image data and/or realize an effective protection of the privacy of the target subject. In comparison with conventional ways (e.g., using a password, a user ID of the target subject, etc.) to access of the target image data, the use of the identification information may be safer and more convenient.

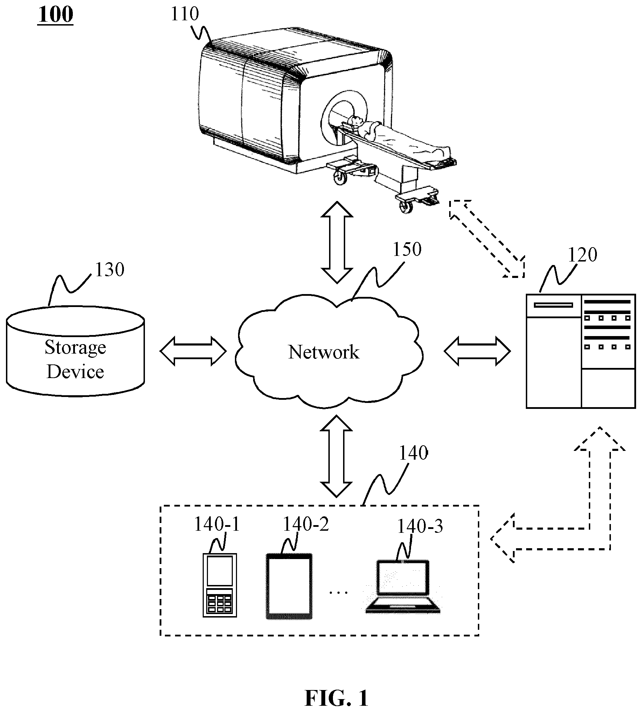

FIG. 1 is a schematic diagram illustrating an exemplary data management system 100 according to some embodiments of the present disclosure. As illustrated, the data management system 100 may include a scanner 110, a processing device 120, a storage device 130, one or more terminals 140, and a network 150. The components in the data management system 100 may be connected in various ways. Merely by way of example, as illustrated in FIG. 1, the scanner 110 may be connected to the processing device 120 through the network 150. As another example, the scanner 110 may be connected with the processing device 120 directly as indicated by the bi-directional arrow in dotted lines linking the scanner 110 and the processing device 120. As a further example, the storage device 130 may be connected with the processing device 120 directly (not shown in FIG. 1) or through the network 150. As still a further example, one or more terminal(s) 140 may be connected with the processing device 120 directly (as indicated by the bi-directional arrow in dotted lines linking the terminal(s) 140 and the processing device 120) or through the network 150.

The scanner 110 may scan a subject or a portion thereof that is located within its detection region, and generate data (e.g., scanning data, image data, etc.) relating to the (portion of) subject. The scanner 110 may include a positron emission computed tomography (PET) scanner, a single-photon emission computed tomography (SPECT) scanner, an emission computed tomography (ECT) scanner, a computed tomography (CT) scanner, or the like. In some embodiment, the scanner 110 may be a multi-modality device including two or more scanners exemplified above. For example, the scanner 110 may be a PET-CT scanner, a PET-MR scanner, etc.

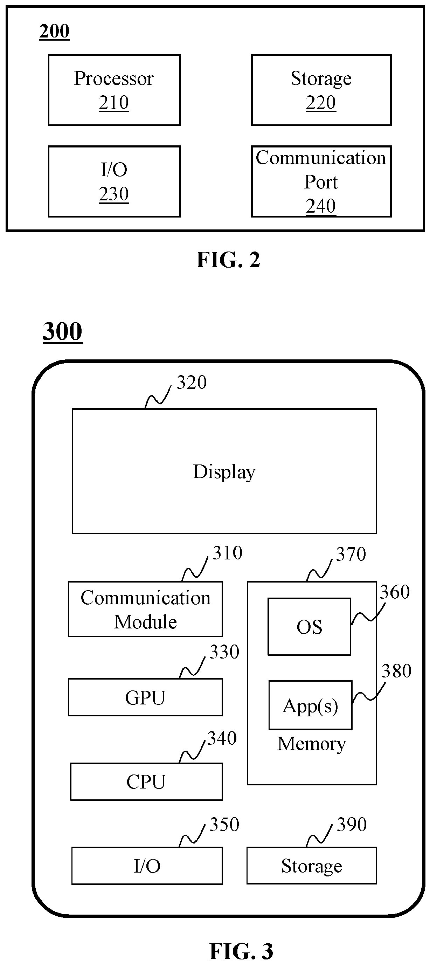

The processing device 120 may process data and/or information obtained and/or retrieve from the scanner 110, the terminal(s) 140, the storage device 130 and/or other storage devices. In some embodiments, the processing device 120 may be a workstation, a client terminal, a console, etc. In some embodiments, the processing device 120 may be a single server or a server group. The server group may be centralized or distributed. In some embodiments, the processing device 120 may be local or remote. In some embodiments, the processing device 120 may be implemented on a cloud platform. In some embodiments, the processing device 120 may be implemented on a computing device 200 having one or more components illustrated in FIG. 2 in the present disclosure.

The storage device 130 may store data and/or instructions. In some embodiments, the storage device 130 may store data obtained from the scanner 110, the terminal(s) 140, and/or the processing device 120. The storage device 130 may be local or remote. In some embodiments, the storage device 130 may include a mass storage device, a removable storage device, a volatile read-and-write memory, a read-only memory (ROM), or the like, or any combination thereof.

The terminal(s) 140 may include a mobile device 140-1, a tablet computer 140-2, a laptop computer 140-3, or the like, or any combination thereof. In some embodiments, the mobile device 140-1 may include a smart home device, a wearable device, a smart mobile device, a virtual reality device, an augmented reality device, or the like, or any combination thereof. In some embodiments, the terminal(s) 140 may remotely operate the scanner 110. In some embodiments, the terminal(s) 140 may operate the scanner 110 via a wireless connection. In some embodiments, the terminal(s) 140 may receive information and/or instructions inputted by a user, and send the received information and/or instructions to the scanner 110 or the processing device 120 via the network 150. In some embodiments, the terminal(s) 140 may receive data and/or information from the processing device 120. In some embodiments, the terminal(s) 140 may be part of the processing device 120.

The network 150 may include any suitable network that can facilitate the exchange of information and/or data for the data management system 100. In some embodiments, one or more components of the data management system 100 (e.g., the scanner 110, the terminal(s) 140, the processing device 120, or the storage device 130) may communicate information and/or data with one or more other components of the data management system 100 via the network 150. In some embodiments, the network 150 may be any type of wired or wireless network, or a combination thereof. The network 150 may be and/or include a public network (e.g., the Internet), a private network (e.g., a local area network (LAN), a wide area network (WAN)), etc.), a wired network (e.g., an Ethernet network), a wireless network (e.g., an 802.11 network, a Wi-Fi network, etc.), a cellular network (e.g., a Long Term Evolution (LTE) network), a frame relay network, a virtual private network ("VPN"), a satellite network, a telephone network, routers, hubs, switches, server computers, and/or any combination thereof.

It should be noted that the scanner 110 may also be a standalone device external to the data management system 100, and the data management system 100 may be connected to or in communication with the scanner 110 via the network 150. All such modifications are within the protection scope of the present disclosure.

FIG. 2 is a schematic diagram illustrating hardware and/or software components of an exemplary computing device 200 on which the processing device 120 may be implemented according to some embodiments of the present disclosure. As illustrated in FIG. 2, the computing device 200 may include a processor 210, storage 220, an input/output (I/O) 230, and a communication port 240.

The processor 210 may execute computer instructions (program code) and perform functions of the processing device 120 in accordance with techniques described herein. The computer instructions may include, for example, routines, programs, objects, components, signals, data structures, procedures, modules, and functions, which perform particular functions described herein. For example, the processor 210 may process data obtained from the scanner 110, the terminal(s) 140, the storage device 130, and/or any other component of the data management system 100. In some embodiments, the processor 210 may perform instructions obtained from the terminal(s) 140. In some embodiments, the processor 210 may include one or more hardware processors, such as a microcontroller, a microprocessor, a reduced instruction set computer (RISC), an application specific integrated circuits (ASICs), an application-specific instruction-set processor (ASIP), a central processing unit (CPU), a microcontroller unit, a digital signal processor (DSP), a field programmable gate array (FPGA), an advanced RISC machine (ARM), a programmable logic device (PLD), any circuit or processor capable of executing one or more functions, or the like, or any combinations thereof.

The storage 220 may store data/information obtained from the scanner 110, the terminal(s) 140, the storage device 130, or any other component of the data management system 100. In some embodiments, the storage 220 may include a mass storage device, a removable storage device, a volatile read-and-write memory, a read-only memory (ROM), or the like, or any combination thereof.

The I/O 230 may input or output signals, data, and/or information. In some embodiments, the I/O 230 may enable user interaction with the processing device 120. In some embodiments, the I/O 230 may include an input device and an output device. Exemplary input devices may include a keyboard, a mouse, a touch screen, a microphone, or the like, or a combination thereof. Exemplary output devices may include a display device, a loudspeaker, a printer, a projector, or the like, or a combination thereof.

The communication port 240 may be connected with a network (e.g., the network 150) to facilitate data communications. The communication port 240 may establish connections between the processing device 120 and the scanner 110, the terminal(s) 140, or the storage device 130. The connection may be a wired connection, a wireless connection, or a combination of both that enables data transmission and reception..

FIG. 3 is a schematic diagram illustrating hardware and/or software components of an exemplary mobile device 300 according to some embodiments of the present disclosure. As illustrated in FIG. 3, the mobile device 300 may include a communication module 310, a display 320, a graphics processing unit (GPU) 330, a central processing unit (CPU) 340, an I/O 350, a memory 370, and storage 390. In some embodiments, any other suitable component, including but not limited to a system bus or a controller (not shown), may also be included in the mobile device 300. In some embodiments, a mobile operating system 360 (e.g., iOS, Android, Windows Phone, etc.) and one or more applications 380 may be loaded into the memory 370 from the storage 390 in order to be executed by the CPU 340. The applications 380 may include a browser or any other suitable mobile apps for receiving and rendering information relating to data processing or other information from the processing device 120. User interactions with the information stream may be achieved via the I/O 350 and provided to the processing device 120 and/or other components of the data management system 100 via the network 150.

To implement various modules, units, and their functionalities described in the present disclosure, computer hardware platforms may be used as the hardware platform(s) for one or more of the elements described herein. The hardware elements, operating systems and programming languages of such computers are conventional in nature, and it is presumed that those skilled in the art are adequately familiar therewith to adapt those technologies to generate an imaging report as described herein. A computer with user interface elements may be used to implement a personal computer (PC) or another type of work station or terminal device, although a computer may also act as a server if appropriately programmed. It is believed that those skilled in the art are familiar with the structure, programming and general operation of such computer equipment and as a result, the drawings should be self-explanatory.

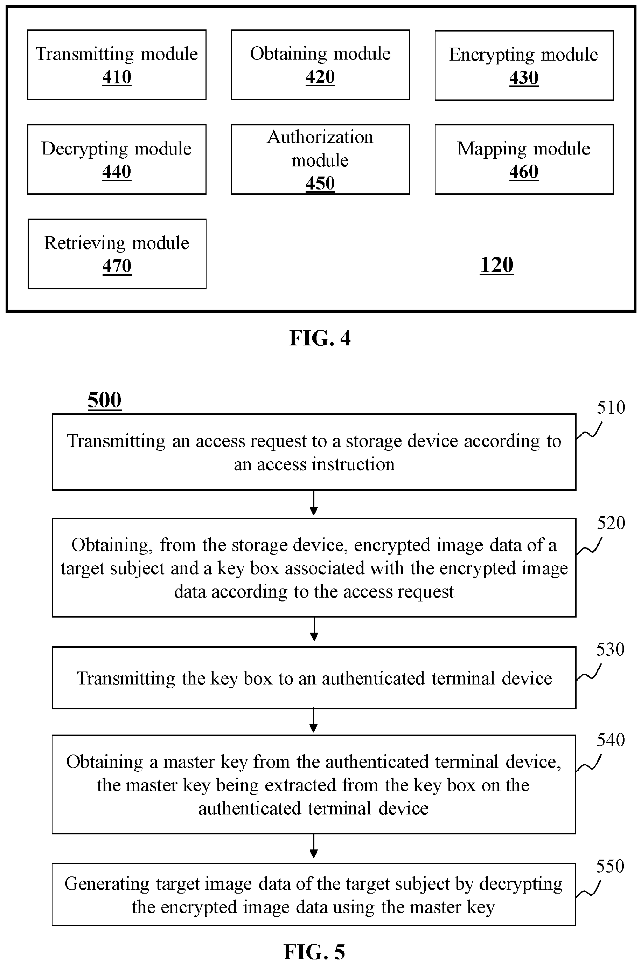

FIG. 4 is a block diagram illustrating an exemplary processing device according to some embodiments of the present disclosure. The processing device 120 may include a transmitting module 410, an obtaining module 420, an encrypting module 430, a decrypting module 440, an authorization module 450, a mapping module 460, and a retrieving module 470. One or more of the modules of the processing device 120 may be interconnected. The connection(s) may be wireless or wired. At least a portion of the processing device 120 may be implemented on a computing device as illustrated in FIG. 2 or a mobile device as illustrated in FIG. 3.

The transmitting module 410 may transmit data/information from a device or component (e.g., a storage device, a terminal device, etc.). In some embodiments, the transmitting module 410 may transmit an access request to a storage device according to an access instruction. In some embodiments, the transmitting module 410 may transmit the key box to an authenticated terminal device. In some embodiments, the transmitting module 410 may transmit the public key and the private key to the authenticated terminal device. In some embodiments, the transmitting module 410 may transmit an access request including the target feature information to the storage device.

The obtaining module 420 may obtain data/information from a device or component (e.g., a storage device, a terminal device, etc.). In some embodiments, the obtaining module 420 may obtain, from the storage device, encrypted image data of a target subject and a key box associated with the encrypted image data according to the access request. In some embodiments, the obtaining module 420 may obtain a master key from the authenticated terminal device, the master key being extracted from the key box on the authenticated terminal device. In some embodiments, the obtaining module 420 may receive identity information of the emergency contact, and transmit a password request to the storage device. In some embodiments, the obtaining module 420 may receive the password of the target subject from the storage device. In some embodiments, the obtaining module 420 may obtain image data and identification information of a subject. In some embodiments, the obtaining module 420 may extract target feature information of the target subject from the target identification information.

The encrypting module 430 may encrypt image data. In some embodiments, the encrypting module 430 may generate a master key according to a master key generation algorithm. The master key may be used to encrypt and/or decrypt the target image data. The master key generation algorithm may be a Hash algorithm. The encrypting module 430 may generate encrypted image data by encrypting image data using the master key according to an image data encryption algorithm. The image data encryption algorithm may be a symmetric encryption algorithm, such as an advanced encryption standard (AES) algorithm, a data encryption standard (DES) algorithm, SM4, etc. The encrypting module 430 may generate a key box by encrypting the master key according to a key box generation algorithm. In some embodiments, the key box generation algorithm may be an asymmetric cryptographic algorithm, such as a Rivest-Shamir-Adleman (RSA) algorithm, an Elgamal algorithm, a SM2, etc. The key box may be generated by encrypting the master key using the public key of the key box generation algorithm.

The decrypting module 440 may decrypt image data. In some embodiments, the decrypting module 440 may generate target image data of a target subject by decrypting the encrypted image data using the master key. The decrypting module 440 may match the encrypted image data and the master key, and generate the target image data of the target subject by decrypting the encrypted image data using the master key.

The authorization module 450 may authorize an image viewer (e.g., a doctor, a technician, etc.) to view target image data. In some embodiments, the authorization module 450 may generate an emergency contact authorization request. The emergency contact authorization request may be a message that requests the emergency contact to authorize the image viewer to view the target image data of the target subject. In some embodiments, the emergency contact authorization request may be presented to the emergency contact via an I/O of the processing device 120. For example, the emergency contact authorization request may be displayed in a pop-up window of a screen of the processing device 120 directly. The emergency contact may be prompted to authorize the image viewer to view the target image data of the target subject via the I/O of the processing device 120. For example, the emergency contact may be prompted to provide the identity of the emergency contact. The identity of the emergency contact may include, for example, a user ID of the emergency contact, the name of the emergency contact, a device ID of a terminal device of the emergency contact, etc. The identity of the emergency contact may be used to retrieve a password from the storage device. The password may be needed when the authenticated terminal device opens the key box.

The mapping module 460 may determine a mapping relationship between the image data and the identification information. In some embodiments, the mapping module 460 may determine the mapping relationship between the image data and the identification information by combining the image data with the identification information of the subject according to a preset combining protocol. The combining protocol refers to a protocol that combines two elements (e.g., two variables) so as to form a mapping relationship between the two elements. The combining protocol may include, for example, a key-value combining protocol. The key-value combining protocol may form a key-value mapping relationship between the image data and the identification information of the subject.

The retrieving module 470 may retrieve target image data of a target subject from the storage device. In some embodiments, the retrieving module 470 may obtain a mapping relationship between the identification information and the image data of the target subject. The mapping relationship may indicate a correspondence between the target identification information of the target subject and the target image data of the target subject. The retrieving module 470 may determine the target image data based on the mapping relationship and the target identification information. The retrieving module 470 may retrieve the target image data of the target subject from the storage device.

FIG. 5 is a flowchart illustrating an exemplary process for managing image data according to some embodiments of the present disclosure. In some embodiments, at least a portion of the process 500 may be performed by the processing device 120 (e.g., implemented in the computing device 200 shown in FIG. 2, the processing device illustrated in FIG. 4). In some embodiments, at least a portion of the process 500 may be performed by a terminal device (e.g., the mobile device 300 shown in FIG. 3) embodying software and/or hardware.

In 510, the processing device 120 (e.g., the processor 210, the transmitting module 410) may transmit an access request to a storage device according to an access instruction.

The access instruction may be provided for instructing the processing device 120 (e.g., a workstation) to transmit the access request to the storage device. The access instruction may be a message input by a patient or a doctor via an I/O (e.g., the I/O 230) of the processing device 120 or an interface of the terminal device 140.

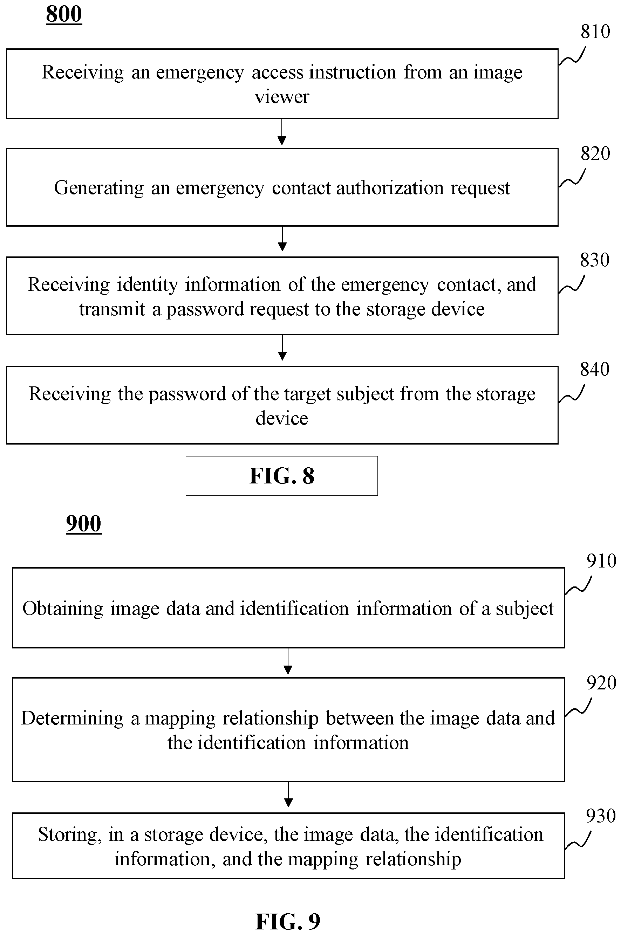

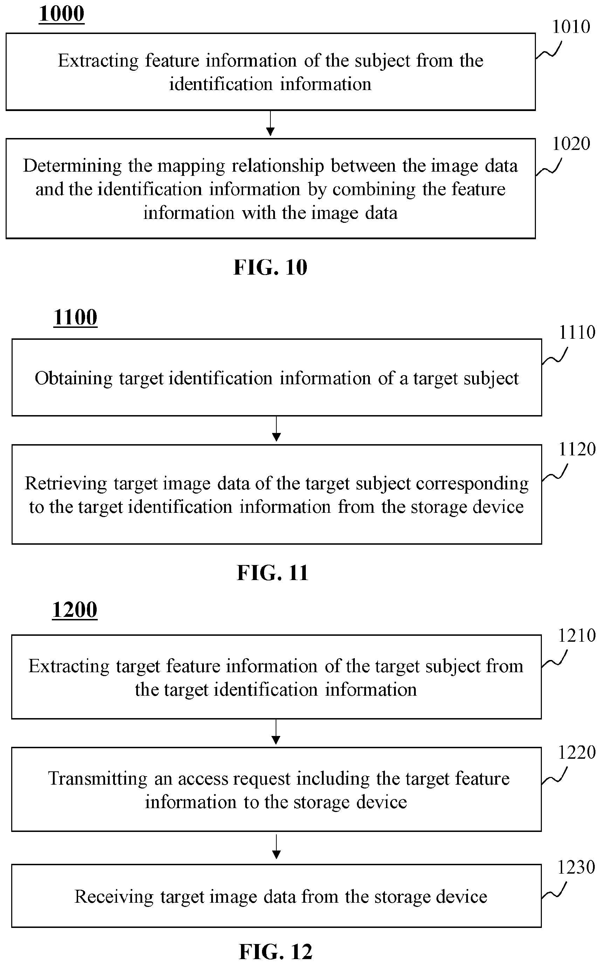

In some embodiments, the storage device may be a server (e.g., a cloud server). The server may be operably connected to the processing device 120 via the network 150. The server may store image data (e.g., original image data, processed image data (e.g., denoised image data), etc.) of one or more subjects. The one or more subjects may be one or more patients. In some embodiment, the image data of the one or more subjects may be generated by scanning the one or more subjects using at least one imaging device (e.g., the scanner 110). For instance, the image data of the one or more subjects may be obtained by image reconstruction based on scanning data of the one or more subjects. The scanning data of the one or more subjects may be obtained by scanning the one or more subjects using the at least one imaging device. The image data of the one or more subjects may include image data of at least one specific portion, organ, and/or tissue of the one or more patients. Merely by way of example, the image data of the one or more subjects may include image data of the head, the brain, the neck, the body, shoulders, arms, the thorax, the cardiac, the stomach, blood vessels, soft tissue, knees, feet, or the like, or a combination thereof, of at least one of the one or more patients. In some embodiments, the image data of the one or more subjects may be stored in the storage device according to the processes 900 and 1000 as illustrated in FIGs. 9 and 10.

A data volume of the image data of the one or more subjects may be relatively large. In this case, the image data of the one or more subjects may be stored in the storage device (e.g., a cloud server), instead of the at least one imaging device and/or the processing device 120, which may reduce the resource consumption of the at least one imaging device and/or the processing device 120, and/or improve the efficiency for retrieval of the image data for purposes of, e.g., viewing by an image viewer (e.g., a doctor).

The access request may be a request to access the storage device (e.g., a database in the cloud server) to retrieve target image data stored in the storage device. The access request may include information related to a target subject (e.g., a target patient) and/or an imaging scan performed on the target subject (also referred to as related information of the target subject for brevity), such as a user ID of the target subject, information of a doctor that prescribed and/or scheduled the imaging scan, information of an institution (e.g., a hospital) where the imaging scan was performed, time information of the imaging scan (e.g., a scanning time period, a specific time at which the imaging scan was performed), a serial number of the imaging scan, the identification information of the target subject, etc.

Merely for illustration, when a doctor needs to view target image data of a target subject, the doctor may input an access instruction into the processing device 120, e.g., via the I/O of the processing device 120 or a terminal device of the doctor. After the processing device 120 receives the access instruction, the processing device 120 may transmit an access request to the storage device (e.g., a cloud server). The access request may be a request for retrieving the target image data of the target subject from the cloud server.

In 520, the processing device 120 (e.g., the processor 210, the obtaining module 420) may obtain, from the storage device, encrypted image data of a target subject and a key box associated with the encrypted image data according to the access request.

After the image data of the one or more subjects is generated, the image data of the one or more subjects may be encrypted using an image data encryption algorithm. The image data encryption algorithm may include, for example, a symmetric encryption algorithm, such as an advanced encryption standard (AES) algorithm, a data encryption standard (DES) algorithm, etc.

In some embodiments, the image data may be encrypted on the imaging device (e.g., the scanner 110) after the imaging device generates the image data by scanning the one or more subjects or portions thereof. In some embodiments, the image data may be encrypted on the processing device 120 after the processing device 120 obtains the image data from the imaging device. It should be noted that the image data may be encrypted on any suitable device (e.g., the storage device), which is not limiting.

The processing device 120 may obtain, from the storage device, target image data encrypted according to the image data encryption algorithm. The target image data encrypted according to the image data encryption algorithm may also be referred to as encrypted image data.

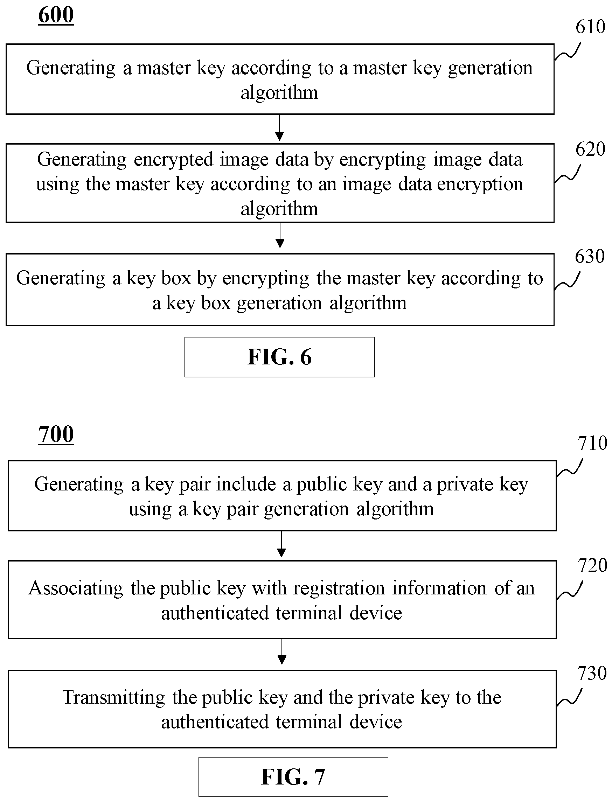

The key box may be a virtual container for storing and encrypting a master key. The master key may be used to encrypt and/or decrypt the target image data. In some embodiments, the master key may be generated using a master key generation algorithm based on the related information of the target subject. The master key generation algorithm may be, e.g., a Hash algorithm. The encrypted image data may be target image data encrypted using the master key according to the image data encryption algorithm. The key box may be generated by encrypting the master key according to a key box generation algorithm. The key box generation algorithm may be an asymmetric cryptographic algorithm, such as a Rivest-Shamir-Adleman (RSA) algorithm, an Elgamal algorithm, SM2 algorithm, etc. In some embodiments, the key box may be generated during the process of encrypting the image data. Details regarding the master key generation algorithm, the image data encryption algorithm, and the key box generation algorithm may be found elsewhere in the present disclosure. See, for example, FIG. 6 and the descriptions thereof.

The key box may be separated from the encrypted image data rather than incorporated into the encrypted image data. For instance, the key box may be stored separately from the encrypted image data and/or transmitted separately from the encrypted image data. In some embodiments, after the encrypted image data and the key box are generated, the encrypted image data and the key box may be stored in the storage device as two separate files. For example, the encrypted image data and the key box may be generated on the imaging device, and the processing device 120 may obtain the encrypted image data and the key box from the imaging device and store the encrypted image data and the key box in the storage device. As another example, the encrypted image data and the key box may be generated on the imaging device, and the imaging device may transmit the encrypted image data and the key box to the storage device directly without involving the processing device 120.

For illustration purposes, after the processing device 120 transmits the access request to the storage device (e.g., a cloud server), the storage device may obtain the related information of the target subject in the access request, and retrieve corresponding encrypted image data and the key box associated with the encrypted image data according to the related information of the target subject. In some embodiments, the storage device may transmit the encrypted image data and the key box to the processing device 120.

In some embodiments, a first correspondence relationship between related information of a target subject and the corresponding encrypted image data and a second correspondence relationship between the related information of the target subject and a corresponding key box may be predetermined. The storage device may retrieve the corresponding encrypted image data and the key box according to the first correspondence relationship and the correspondence mapping relationship. In some embodiments, a third correspondence relationship between encrypted image data and a corresponding key box and a fourth correspondence relationship between related information of the target subject and a combination of the encrypted image data and the key box may be predetermined. The storage device may retrieve the corresponding encrypted image data and the key box according to the third correspondence relationship and the fourth correspondence relationship.

In 530, the processing device 120 (e.g., the processor 210, the transmitting module 410) may transmit the key box to an authenticated terminal device.

An authenticated terminal device may refer to a terminal device of a subject (e.g., the target subject). When the processing device 120 receives the key box from the storage device, the processing device 120 may transmit the key box to an authenticated terminal device.

In some embodiments, the processing device 120 may further request an authorization from the authenticated terminal device. After the processing device 120 receives the authorization from the authenticated terminal device, the processing device 120 may transmit the key box to the authenticated terminal device. The key box may be decrypted, and the master key stored in the key box may be obtained. The master key may be used to decrypt the encrypted image data. In some embodiments, the authorization from the authenticated terminal device may indicate that the authenticated terminal device authorizes the processing device 120 to transmit the key box to the authenticated terminal device. In some embodiments, the authorization from the authenticated terminal device may indicate that the target subject (e.g., a target patient whose target image data is retrieved) allows an image viewer (e.g., a doctor, a technician, etc.) to view the target image data. In this case, the target subject may authorize the processing device 120, through the authenticated terminal device, to transmit the key box to the authenticated terminal device. Merely for illustration, the processing device 120 may transmit an authorization request to the authenticated terminal device of the target subject. In response to the authorization request, the authenticated terminal device may transmit an authorization to the processing device 120 according to a confirmation instruction entered by the target user on the authenticated terminal device. The processing device 120 may confirm that the processing device 120 has been authorized successfully. The processing device 120 may transmit the key box to the authenticated terminal device.

Alternatively, the processing device 120 may transmit an authorization password and the key box to the authenticated terminal device. For example, the target subject or an emergency contact (e.g., a family member, a guardian) of the target subject may input the authorization password into the processing device 120 via an I/O of the processing device 120. The authenticated terminal device may verify the authorization password. If the verification fails, the processing device 120 may be refused to transmit the key box to the authenticated terminal device. If the verification succeeds, the processing device 120 may transmit the key box to the authenticated terminal device.

In 540, the processing device 120 (e.g., the processor 210, the obtaining module 420) may obtain a master key from the authenticated terminal device, the master key being extracted from the key box on the authenticated terminal device.

After the authenticated terminal device receives the key box, the master key may be obtained by decrypting the key box on the authenticated terminal device. The decryption of the key box may be deemed as unlocking the key box and taking out the master key from the key box. The authenticated terminal device may transmit the master key to the processing device 120. In some embodiments, the master key may be transmitted to the processing device 120 through a specific information transmission channel. The specific information transmission channel may have a relatively high security level so as to avoid a leakage of the master key to an unintended recipient.

In 550, the processing device 120 (e.g., the processor 210, the decrypting module 440) may generate target image data of the target subject by decrypting the encrypted image data using the master key.

After the processing device 120 receives the master key, the processing device 120 may match the encrypted image data and the master key, and generate the target image data of the target subject by decrypting the encrypted image data using the master key.

According to the embodiments set forth above, the processing device 120 may transmit the access request to the storage device according to the access instruction, obtain, from the storage device, the encrypted image data of the target subject and the key box associated with the encrypted image data according to the access request, transmit the key box to the authenticated terminal device, obtain the master key extracted from the key box on the authenticated terminal device, and generate the target image data of the target subject by decrypting the encrypted image data using the master key. The target subject (e.g., a target patient) may view the target image data safely according to the process 500; an image viewer (e.g., a doctor, a technician, etc.) may request an authorization from the target subject before the image viewer views the target image data, which may improve the safety of the storage and transmission of the target image data of the target subject, realize an effective protection of the privacy of the target subject, and/or avoid a breach of private information of the target subject. In some embodiments, the encrypted image data and the corresponding key box may be decrypted on different devices, respectively. For example, the key box may be decrypted on the authenticated terminal device, and the encrypted image data may be decrypted on the processing device 120. In this way, the risk of a breach of the target image data may be reduced.

In some embodiments, the key box may be generated by encrypting the master key using a public key corresponding to the target subject. The public key may be obtained from the authenticated terminal device or the storage device. The master key may be extracted from the key box using a private key corresponding to the target subject. The public key and the private key may be a key pair generated according to a key pair generation algorithm (e.g., a symmetric encryption algorithm). The public key and the private key of the key pair may be used in the encryption and decryption of the master key, respectively.

In some embodiments, the encrypted image data and the key box associated with the encrypted image data may be generated on the imaging device (e.g., the scanner 110). The master key for encrypting the image data may be prohibited from being transmitted out of the imaging device unencrypted. The master key may be encrypted using the public key corresponding to the target subject so as to generate the key box on the imaging device. After the encrypted image data is generated, the imaging device may transmit the encrypted image data and the key box including the encrypted master key separately, which may improve the security of the transmission of the encrypted image data. If a data breach occurs involving the encrypted image data during the transmission process, the encrypted image data may not be decrypted without the corresponding key box, and the private information of the target subject may be protected.

In some embodiments, the key box may be generated by encrypting the master key using a public key. The key box may be decrypted on the authenticated terminal device of the target subject using a corresponding private key stored in the authenticated terminal device. The private key may be unavailable for any other devices except the authenticated terminal device such that only the target subject is able to control the decryption of the encrypted image data using the private key. An image viewer (e.g., a doctor) may view the target image data only under the authorization from the target subject. In this way, the safety of the storage and transmission of the target image data of the target subject may be improved and an effective protection of the privacy of the target subject may be realized.

In some embodiments, before the processing device 120 executes the operation 510, the processing device 120 may further obtain the encrypted image data and the key box generated on the imaging device and stored the encrypted image data and the key box in the storage device (e.g., a cloud server).

In some embodiments, after the processing device 120 executes the operation 550, the processing device 120 may further transmit the target image data of the target subject to a terminal device of the image viewer (e.g., a doctor), so that the image viewer may view the target image data via the terminal device of the image viewer. For example, when a doctor checks a health condition of a target patient in a ward, the doctor may view target image data of the target patient in the ward using his/her terminal device instead of a workstation, thereby improving the efficiency of the procedure.

FIG. 6 is a flowchart illustrating an exemplary process for encrypting image data of a subject according to some embodiments of the present disclosure. In some embodiments, at least a portion of the process 600 may be performed by the processing device 120 (e.g., implemented in the computing device 200 shown in FIG. 2, the processing device illustrated in FIG. 4) or the scanner 110. In some embodiments, at least a portion of the process 600 may be performed by a terminal device (e.g., the mobile device 300 shown in FIG. 3) embodying software and/or hardware.

In 610, the processing device 120 (e.g., the processor 210, the encrypting module 430) may generate a master key according to a master key generation algorithm.

In some embodiments, the master key generation algorithm may be a Hash algorithm. The Hash algorithm may convert an input character string of any length into an output character string of a preset length. The preset length may be, for example, 32 bits, 64 bits, 128 bits, 256 bits, etc. The processing device 120 may generate the master key according to the Hash algorithm. In some embodiments, the master key may be generated based on at least a portion of related information of the subject, such as the user ID of the subject, information of the doctor that prescribed and/or scheduled the imaging scan, information of the institution (e.g., the hospital) where the imaging scan was performed, the time information of the imaging scan (e.g., a scanning time period, the specific time at which the imaging scan was performed), the serial number of the imaging scan, the identification information of the target subject, etc. For example, the master key may be generated based on characters (e.g., a binary number) processed according to the Hash algorithm. The characters may represent at least a portion of the exemplified related information of the subject.

In 620, the processing device 120 (e.g., the processor 210, the encrypting module 430) may generate encrypted image data by encrypting image data using the master key according to an image data encryption algorithm.

In some embodiments, the image data encryption algorithm may be a symmetric encryption algorithm. The symmetric encryption algorithm refers to an algorithm that uses a same key (e.g., the master key) to encrypt and decrypt data (e.g., the image data). Merely by way of example, the image data encryption algorithm may include an advanced encryption standard (AES) algorithm, a data encryption standard (DES) algorithm, a 3DES algorithm, a blowfish algorithm, SM4, etc.

In 630, the processing device 120 (e.g., the processor 210, the encrypting module 430) may generate a key box by encrypting the master key according to a key box generation algorithm.

In some embodiments, the key box generation algorithm may be an asymmetric cryptographic algorithm. The asymmetric cryptographic algorithm refers to an algorithm that uses a key pair including two different keys to encrypt and decrypt data (e.g., the image data), respectively. The key pair may include a public key and a private key. The public key may be used to encrypt the image data, and the private key may be used to decrypt encrypted image data. Merely by way of example, the key box generation algorithm may include a Rivest-Shamir-Adleman (RSA) algorithm, an Elgamal algorithm, a Rabin algorithm, an elliptic curve cryptography (ECC) algorithm, SM2, etc. The key box may be generated by encrypting the master key using the public key of the key box generation algorithm.

According to the embodiments set forth above, the image data may be encrypted using the master key, and the key box may be generated by encrypting the master key, which may be a two-step encryption process. During a data retrieval process, the key box may need to be decrypted before the encrypted image data is decrypted to obtain the target image data, thereby improving the security of the target image data.

FIG. 7 is a flowchart illustrating an exemplary process for generating a key pair according to some embodiments of the present disclosure. In some embodiments, at least a portion of the process 700 may be performed by the processing device 120 (e.g., implemented in the computing device 200 shown in FIG. 2, the processing device illustrated in FIG. 4) or the scanner 110. In some embodiments, at least a portion of the process 700 may be performed by a terminal device (e.g., the mobile device 300 shown in FIG. 3) embodying software and/or hardware.

In 710, the processing device 120 (e.g., the processor 210, the encrypting module 430) may generate a key pair include a public key and a private key using a key pair generation algorithm.

In some embodiments, the key pair generation algorithm may be an asymmetric cryptographic algorithm. The key pair may include the public key and the private key. In some embodiments, the processing device 120 may generate a key pair corresponding to the subject using the key pair generation algorithm (e.g., the RSA algorithm, the Elgamal algorithm, the Rabin algorithm, the SM2 algorithm). In some embodiments, the key pair may be read by any suitable devices or software systems using the user ID of the subject.

In 720, the processing device 120 (e.g., the processor 210, the encrypting module 430) may associate the public key with registration information of an authenticated terminal device.

The registration information of the authenticated terminal device may include a device ID of the authenticated terminal device, a user ID of the subject, a UID of the subject, a user ID of an emergency contact of the subject, etc. The UID of the subject may be an ID assigned to the authenticated terminal device by the processing device 120. In some embodiments, after the processing device 120 generates a key pair including a public key and a private key for a subject, the processing device 120 may further obtain registration information of a terminal device (e.g., the authenticated terminal device) of the subject. The processing device 120 may associate the public key with the registration information of the authenticated terminal device. The public key may be stored together with the registration information. For instance, the processing device 120 may generate a list for recording a correspondence relationship between registration information of authenticated terminal devices of one or more subjects and public keys corresponding to the one or more subjects. Based on registration information (e.g., a user ID) of a target subject, the processing device 120 may obtain a corresponding public key of the target subject according to the list.

In 730, the processing device 120 (e.g., the processor 210, the transmitting module 410) may transmit the public key and the private key to the authenticated terminal device.

After the processing device 120 generates the key pair including the public key and the private key corresponding to the subject, the processing device 120 may transmit the public key and the private key to the authenticated terminal device of the subject. The imaging device or the processing device 120 may obtain the public key from the authenticated terminal device and generate the key box using the public key. The key box may be decrypted on the authenticated terminal device using the private key. In some embodiments, the processing device 120 may transmit the public key and the private key to the authenticated terminal device through a specific information transmission channel. The specific information transmission channel may have a relatively high security level so as to avoid a breach of the public key and/or the private key. In some embodiments, the private key may have an expiration date, and a user (e.g., the subject) may need to update the private key before the expiration date to ensure the validity of the private key.

In some embodiments, the key pair may also be generated by the storage device (e.g., a cloud server). The cloud server may perform the operations 710 through 730 to generate the public key and the private key and transmit the public key and the private key to the authenticated terminal device. The registration information of the authenticated terminal device may also be generated on the cloud server, and the cloud server may associate the public key with the registration information of the authenticated terminal device and store the public key together with the registration information. The processing device 120 or the imaging device may obtain the public key from the cloud server according to the registration information.

In some embodiments, the key pair may be transmitted to a registered terminal device for encrypting or decrypting the key box. The registered terminal device may be a terminal device of an authorized doctor, an emergency contact, etc. In this case, the authorized doctor or the emergency contact may be able to view the image data of the subject.

FIG. 8 is a flowchart illustrating an exemplary process for authorizing an image viewer to view target image data according to some embodiments of the present disclosure. In some embodiments, at least a portion of the process 800 may be performed by the processing device 120 (e.g., implemented in the computing device 200 shown in FIG. 2, the processing device illustrated in FIG. 4) or the scanner 110. In some embodiments, at least a portion of the process 800 may be performed by a terminal device (e.g., the mobile device 300 shown in FIG. 3) embodying software and/or hardware.

In practical applications, when it is needed to open the key box on the authenticated terminal device, in addition to the private key, a password of the target subject may also be needed. The password may be set by the target subject. In some embodiments, the password of the target subject may be stored in the storage device. For example, passwords of a plurality of subjects may be stored in the storage device in advance. Therefore, during a data retrieval process, only if a password input into the authenticated terminal device by the target subject is correct and the private key is used to open the key box successfully, the master key may be extracted. If the target subject is unable to input the password in time, and an image viewer (e.g., a doctor) needs to view the target image data immediately (e.g., in an emergent condition), the image viewer may contact the emergency contact of the target subject to obtain the password.

In 810, the processing device 120 (e.g., the processor 210, the obtaining module 420) may receive an emergency access instruction from an image viewer.

The emergency access instruction may refer to an instruction to access the storage device to retrieve image data of the target subject in emergency (e.g., the target subject is insensible). In some embodiments, the image viewer may input the emergency access instruction into the processing device 120 via an I/O of the processing device 120 directly. In some embodiments, the image viewer may transmit the emergency access instruction to the processing device 120 through a terminal device of the image viewer.

In 820, the processing device 120 (e.g., the processor 210, the authorization module 450) may generate an emergency contact authorization request.

The emergency contact authorization request may be a message that requests the emergency contact to authorize the image viewer to view the target image data of the target subject. In some embodiments, the emergency contact authorization request may be presented to the emergency contact via an I/O of the processing device 120. For example, the emergency contact authorization request may be displayed in a pop-up window of a screen of the processing device 120 directly. The emergency contact may be prompted to authorize the image viewer to view the target image data of the target subject via the I/O of the processing device 120. For example, the emergency contact may be prompted to provide the identity of the emergency contact. The identity of the emergency contact may include, for example, a user ID of the emergency contact, the name of the emergency contact, a device ID of a terminal device of the emergency contact, etc. The identity of the emergency contact may be used to retrieve a password from the storage device. The password may be needed when the authenticated terminal device opens the key box.

In some embodiments, the processing device 120 may transmit the emergency contact authorization request to the authenticated terminal device. The emergency contact may obtain the password on the authenticated terminal device directly. In some embodiments, the processing device 120 may transmit the emergency contact authorization request to a terminal device of the emergency contact. The emergency contact may be prompted to authorize the image viewer to view the target image data of the target subject on the terminal device of the emergency contact.

In 830, the processing device 120 (e.g., the processor 210, the obtaining module 420) may receive identity information of the emergency contact, and transmit a password request to the storage device.

The password request may be a message that includes a request for retrieving the password of the target subject from the storage device. In some embodiments, the password request may include the identity of the emergency contact. After the processing device 120 receives the identity of the emergency contact, the processing device 120 may transmit the password request including the identity of the emergency contact to the storage device. The storage device may extract the identity of the emergency contact from the password request, and identify, from the passwords of a plurality of subjects, the password of the target subject based on the identity of the emergency contact. The storage device may transmit the password of the target subject to the processing device 120. It is noted that the password of the target subject and the identity of the emergency contact may be obtained when the target subject provides the related information during a registration of the target subject. The password of the target subject and the identity of the emergency contact may be stored in the storage device. The storage device (e.g., a cloud server) or a device manager of the storage device may establish a correspondence relationship between the password of the target subject and the identity of the emergency contact. In this way, the password of the target subject corresponding to the identity of the emergency contact may be identified from passwords of the plurality of subjects.

In 840, the processing device 120 (e.g., the processor 210, the obtaining module 420) may receive the password of the target subject from the storage device.

After the processing device 120 receives the password of the target subject transmitted from the storage device, the password may be presented to the emergency contact via an I/O of the processing device 120 directly. For example, the password may be displayed on a display screen of the processing device 120. In some embodiments, the processing device 120 may transmit the password to the authenticated terminal device. The emergency contact may obtain the password on the authenticated terminal device. In some embodiments, the processing device 120 may also transmit the password to the terminal device of the emergency contact. The emergency contact may authorize, e.g., by providing the password of the target subject, the image viewer to view the image data. In this way, the image viewer can also view the image data normally in an emergency without delaying the diagnosis of the subject.

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure. For example, the identity of the emergency contact may be transmitted from the terminal device of the emergency contact to the cloud server directly. As another example, the password may be replaced with identification information of the target subject, such as facial information, fingerprint information, iris information, etc., of the subject.

FIG. 9 is a flowchart illustrating an exemplary process for storing image data of a subject according to some embodiments of the present disclosure. In some embodiments, at least a portion of the process 900 may be performed by the processing device 120 (e.g., implemented in the computing device 200 shown in FIG. 2, the processing device illustrated in FIG. 4). In some embodiments, at least a portion of the process 900 may be performed by a terminal device (e.g., the mobile device 300 shown in FIG. 3) embodying software and/or hardware.

In 910, the processing device 120 (e.g., the processor 210, the obtaining module 420) may obtain image data and identification information of a subject.

In some embodiment, the image data (also referred to as original image data) of the subject may be generated by scanning the subject using at least one imaging device (e.g., the scanner 110). For example, the at least one imaging device may be a CT scanner, an MR scanner, or a PET scanner, and the image data of the subject may be CT image data, MR image data, or PET image data, correspondingly. The image data of the subject may include image data of at least one specific portion, organ, and/or tissue of the patient.

The identification information of the subject refers to information for identifying the subject. The identification information of the subject may include, for example, facial information, fingerprint information, iris information, etc., of the subject. In some embodiments, the identification information of the subject includes one or more facial images of the subject. The one or more facial images of the subject may be generated by a camera, a video recorder, etc.

When the processing device 120 receives a data acquisition instruction, the processing device 120 may obtain the image data and the identification information of the subject. In some embodiments, the processing device 120 may obtain the image data and the identification information from a same imaging device (e.g., the scanner 110). For example, when the face and a target portion of the subject are in a same scanning area, one or more facial images of subject and the image data of the subject may be generated simultaneously by scanning the subject using the imaging device. In some embodiments, the processing device 120 may obtain the image data and the identification information from different devices. Merely by way of example, the identification information of the subject may be generated by one or more optical sensors of a camera, a video recorder, etc.

In some embodiments, the image data and the identification information may be generated at the same time. For instance, the identification information (e.g., one or more facial images) of the subject may be generated by the one or more optical sensors during a time period of a scan for generating the image data. In some other embodiments, the image data and the identification information may be generated in different time periods, which is not limited to the exemplary embodiments described above in the present disclosure. For instance, one or more facial images of the subject may be generated after the scan for generating the image data is fulfilled.

In 920, the processing device 120 (e.g., the processor 210, the mapping module 460) may determine a mapping relationship between the image data and the identification information.

After the image data and the identification information of the subject is obtained, the processing device 120 may determine the mapping relationship between the image data and the identification information. In some embodiments, the mapping relationship between the image data and the identification information may be determined by combining the image data with the identification information of the subject according to a preset combining protocol. The combining protocol refers to a protocol that combines two elements (e.g., two variables) so as to form a mapping relationship between the two elements. The combining protocol may include, for example, a key-value combining protocol. The key-value combining protocol may form a key-value mapping relationship between the image data and the identification information of the subject. Details regarding the determination of the mapping relationship may be found elsewhere in the present disclosure. See, for example, FIG. 10 and the descriptions thereof.

In 930, the processing device 120 (e.g., the processor 210, the transmitting module 410) may store, in a storage device, the image data, the identification information, and the mapping relationship.

After the mapping relationship between the image data and the identification information of the subject is determined, the processing device 120 may store the image data, the identification information, and the mapping relationship in the storage device. In some embodiments, the storage device may be a local storage device (e.g., the storage device 130). In some embodiments, the storage device may be a storage device external to the data management system 100. For example, the storage device may be a cloud server.

According to the embodiments set forth above, the processing device 120 may obtain the image data and identification information of the subject, determine the mapping relationship between the image data and the identification information, and store, in the storage device, the image data, the identification information, and the mapping relationship. The processing device 120 may store image data, identification information, and a corresponding mapping relationship of each of a plurality of subjects in the storage device in a similar way. When a target subject (e.g., a subject among the plurality of subjects) needs to retrieve target image data of the target subject, the target image data may be obtained by verifying identification information (e.g., a facial image) of the target subject, which improves the safety of the storage and transmission of the target image data and realizes an effective protection of the privacy of the target subject.

In some embodiments, the image data and the identification information may be images of a same modality. Merely by way of example, the imaging device may include a CT scanner, the image data may be CT image data of a target portion of the subject, and the identification information may be facial image(s) of the subject generated by processing CT image(s) of the face of the subject. In such a case, there is no need for two different devices to obtain the image data and the identification information, respectively, which reduces the cost and improves the efficiency of the obtaining of the image data and the identification information of the subject.

After the image data of the subject is generated, the image data may be encrypted. In some embodiments, the image data of the subject may be encrypted using the master key and the public key as described in FIGs. 5-7. In some embodiments, the image data of the subject may be encrypted using the identification information (e.g., the facial information, fingerprint information, iris information, etc.) of the subject.

In some embodiments, the image data may be encrypted on the imaging device (e.g., the scanner 110) after the imaging device generates the image data by scanning the subject or a portion thereof. In some embodiments, the image data may be encrypted on the processing device 120 after the processing device 120 obtains the image data from the imaging device. It should be noted that the image data may be encrypted on any device (e.g., the storage device), which is not limiting.

FIG. 10 is a flowchart illustrating an exemplary process for determining a mapping relationship between image data and identification information of the subject according to some embodiments of the present disclosure. In some embodiments, at least a portion of the process 1000 may be performed by the processing device 120 (e.g., implemented in the computing device 200 shown in FIG. 2, the processing device illustrated in FIG. 4). In some embodiments, at least a portion of the process 1000 may be performed by a terminal device (e.g., the mobile device 300 shown in FIG. 3) embodying software and/or hardware.

In 1010, the processing device 120 (e.g., the processor 210, the mapping module 460) may extract feature information of the subject from the identification information.

The feature information of the subject refers to information of features of the subject or a portion thereof in the identification information. The feature information may include feature information of the face of the subject (also referred to as facial feature information), feature information of a fingerprint of the subject, feature information of an iris pattern of the subject, etc. In some embodiments, the feature information may include facial feature information. The facial feature information may include information relating to a face contour, face organs (e.g., the eyes, the nose, the mouth, and the ears), and/or relative positions between any two face organs, or the like. Merely by way of example, the facial feature information may include a size and/or a shape of the face contour, a shape of the mouth, a distance between the two eyes, a distance between the nose and the mouth, etc.

In some embodiments, the processing device 120 may extract the feature information using a recognition model. In some embodiments, the recognition model may be a machine learning model. Exemplary machine learning models may include a neural network model (e.g., a deep learning model), a deep belief network (DBN), a stacked auto-encoders (SAE), a logistic regression (LR) model, a support vector machine (SVM) model, a decision tree model, a naive Bayesian model, a random forest model, or a restricted Boltzmann machine (RBM), a gradient boosting decision tree (GBDT) model, a LambdaMART model, an adaptive boosting model, a hidden Markov model, a perceptron neural network model, a Hopfield network model, or the like, or any combination thereof.

The training process of the recognition model may include one or more iterations for iteratively updating value(s) of one or more model parameters of the recognition model based on training data (e.g., sample facial feature information and one or more sample subjects) until a termination condition is satisfied in a certain iteration. Exemplary termination conditions may be that a value of a loss function obtained in the certain iteration is less than a threshold value, that a preset count of iterations have been performed, that the loss function converges such that the difference of the values of the loss function obtained in a previous iteration and the current iteration is within a threshold value, etc. Exemplary loss functions may include a focal loss function, a log loss function, a cross-entropy loss, a Dice ratio, or the like.

In 1020, the processing device 120 (e.g., the processor 210, the mapping module 460) may determine a mapping relationship between the image data and the identification information by combining the feature information with the image data.

After the feature information of the subject is extracted from the identification information, the processing device 120 may combine the feature information with the image data. In some embodiments, the processing device 120 may determine an intermediate mapping relationship between the feature information and the subject. Then the processing device 120 may further determine another mapping relationship (also referred to as second mapping relationship) between the feature information and the image data of the subject.

In some embodiments, the processing device 120 may combine the feature information of the subject with the image data of the subject according to a preset combining protocol. The preset combining protocol may include a key-value combining protocol. In some embodiments, the feature information may be determined as key(s) and the image data may be determined as value(s), and the second mapping relationship between the feature information and the image data of the subject may be determined. The second mapping relationship may be a mapping relationship between the key(s) and the value(s).

The second mapping relationship may be designated as the mapping relationship between the image data and the identification information. Merely for illustration, the processing device 120 may generate at least one key based on the facial feature information of the subject, and generate at least one value based on the image data of the subject. The second mapping relationship between the at least one key and the at least one value may be determined. The second mapping relationship may be designated as the mapping relationship between the image data and the identification information.

FIG. 11 is a flowchart illustrating an exemplary process for retrieving target image data from a storage device according to some embodiments of the present disclosure. In some embodiments, at least a portion of the process 1100 may be performed by the processing device 120 (e.g., implemented in the computing device 200 shown in FIG. 2, the processing device illustrated in FIG. 4). In some embodiments, at least a portion of the process 1100 may be performed by a terminal device (e.g., the mobile device 300 shown in FIG. 3) embodying software and/or hardware. The process 1100 may be applied in a scenario where the processing device 120 retrieves target image data from the storage device.

In 1110, the processing device 120 (e.g., the processor 210, the obtaining module 420) may obtain target identification information of a target subject.

The target identification information of the target subject may include facial information, fingerprint information, iris information, etc., of the target subject. In some embodiments, the target identification information may include one or more facial images of the target subject.

In some embodiments, the processing device 120 may obtain a query or a request from the target subject, e.g., via an authenticated terminal device of the target subject for obtaining the target image data. The processing device 120 may obtain the target identification information of the target subject in response to the query or request from the target subject. For instance, the processing device 120 may obtain a facial image of the target subject. The facial image of the target subject may be obtained from, e.g., the authenticated terminal device of the target subject.

In 1120, the processing device 120 (e.g., the processor 210, the retrieving module 470) may retrieve target image data of the target subject corresponding to the target identification information from the storage device.

In some embodiments, the processing device 120 may obtain a mapping relationship between the identification information and the image data of the target subject. The mapping relationship may indicate a correspondence between the target identification information of the target subject and the target image data of the target subject. The processing device 120 may determine the target image data based on the mapping relationship and the target identification information. The processing device 120 may retrieve the target image data of the target subject from the storage device.

According to the embodiments set forth above, the processing device 120 may obtain the target identification information of the target subject, and retrieve the target image data of the target subject corresponding to the target identification information from the storage device. By using the target identification information of the target subject, the retrieval of the target image data may be much safer and more efficient.

As set forth above, in some embodiments, the image data of the subject may be encrypted using the master key and the public key as described in FIGs. 5-7. The retrieved image data may be decrypted using the master key and the private key. In some embodiments, the image data of the subject may be encrypted using the identification information (e.g., the facial information, fingerprint information, iris information, etc.) of the subject. The retrieved image data may be decrypted using the target identification information.

FIG. 12 is a flowchart illustrating an exemplary process for retrieving target image data corresponding to target identification information from a storage device according to some embodiments of the present disclosure. In some embodiments, at least a portion of the process 1200 may be performed by the processing device 120 (e.g., implemented in the computing device 200 shown in FIG. 2, the processing device illustrated in FIG. 4). In some embodiments, at least a portion of the process 1200 may be performed by a terminal device (e.g., the mobile device 300 shown in FIG. 3) embodying software and/or hardware. In some embodiments, the operation 1120 of the process 1100 may be performed according to the process 1200.

In 1210, the processing device 120 (e.g., the processor 210, the obtaining module 420) may extract target feature information of the target subject from the target identification information.

After the processing device 120 obtains the identification information from the authenticated terminal device of the target subject, the processing device 120 may extract the feature information of the target subject from the identification information according to a preset recognition model (e.g., a machine learning model). Merely by way of example, the processing device 120 may extract facial feature information of the target subject from the identification information according to the preset recognition model. The facial feature information may include information relating to a face contour, face organs (e.g., the eyes, the nose, the mouth, and the ears), and/or relative positions between any two face organs, or the like.

In 1220, the processing device 120 (e.g., the processor 210, the transmitting module 410) may transmit an access request including the target feature information to the storage device.

The access request may be a request to access the storage device (e.g., a database in the cloud server) to retrieve target image data stored in the storage device. In some embodiments, the processing device 120 may authenticate the identity of the target subject based on the target feature information (e.g., feature information of one or more facial images) of the target subject. The processing device 120 may determine target image data corresponding to the target feature information after the identity authentication is passed.

Merely for illustration, the processing device 120 may determine, in response to the access request, whether the target feature information matches feature information of a subject among a plurality of subjects. If the processing device 120 determines that the target feature information matches feature information of a subject, the processing device 120 may transmit the access request including the target feature information to the storage device, and retrieve the image data of the subject (i.e., the target image data since the target feature information matches the feature information of the subject) from the storage device based on the feature information of the subject (i.e., the target feature information of the target subject since the target feature information matches the feature information of the subject) and the mapping relationship between the image data and the identification information.

In 1230, the processing device 120 (e.g., the processor 210, the retrieving module 470) may receive target image data from the storage device.

In some embodiments, the processing device 120 may enable a user (e.g., the target subject) to preview the target image data on a display interface. The processing device 120 may also display a prompt message on the display interface indicating whether the target image data (e.g., one or more target images) needs to be printed. If the processing device 120 receives an instruction for printing the target image data from the user, the processing device 120 may transmit the target image data to a printer connected to the processing device 120.

According to the embodiments set forth above, the processing device 120 may obtain the target image data of the target subject from the storage device after the processing device 120 authenticates the identity of the target subject. In some embodiments, the authentication of the identity of the target subject based on the target feature information of the target subject may also be performed by the storage device (e.g., in the form of a cloud server) or a storage manager of the storage device. In this way, the safety of the storage and transmission of the target image data may be improved, and an effective protection of the privacy of the target subject may be realized.

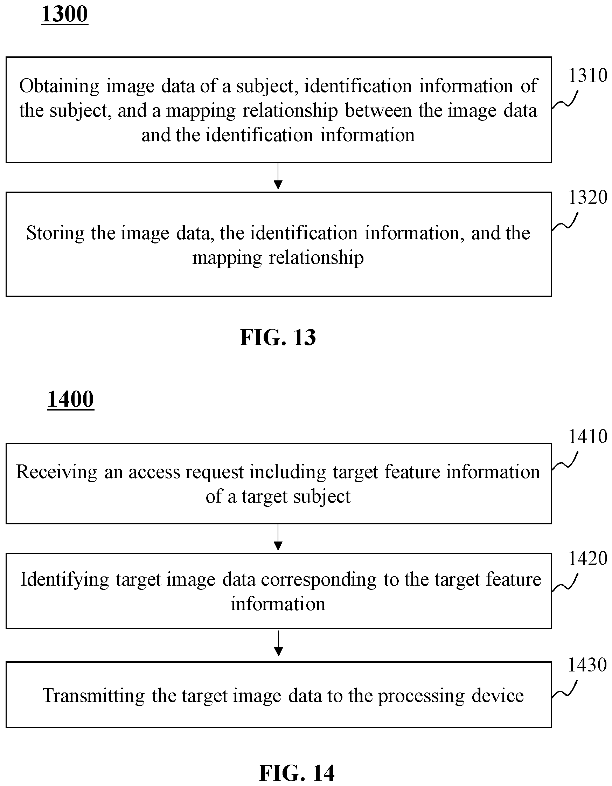

FIG. 13 is a flowchart illustrating an exemplary process for storing image data in a storage device according to some embodiments of the present disclosure. In some embodiments, the storage device may be implemented in a cloud server. In some embodiments, at least a portion of the process 1300 may be performed by the cloud server.

In 1310, the cloud server may obtain image data of a subject, identification information of the subject, and a mapping relationship between the image data and the identification information.

In some embodiments, the cloud server may obtain the image data, the identification information, and the mapping relationship between the image data and the identification information from the processing device 120. The image data of the subject may be generated by scanning the subject using at least one imaging device (e.g., the scanner 110). The identification information of the subject may include, for example, facial information, fingerprint information, iris information, etc., of the subject. In some embodiments, the identification information of the subject may include one or more facial images of the subject. The one or more facial images may be generated by a camera, a video recorder, etc. The mapping relationship between the image data and the identification information of the subject may be determined by combining the image data with the identification information of the subject according to a preset combining protocol. The combining protocol may include, for example, a key-value combining protocol.

In 1320, the cloud server may store the image data, the identification information, and the mapping relationship.

In some embodiments, after the image data, the identification information, and the mapping relationship between the medical image data and the identification information is obtained, the cloud server may store the image data, the identification information, and the mapping relationship in, e.g., a database of the cloud server.

In some embodiments, the cloud server may obtain and store image data, identification information, and the mapping relationship between the image data and the identification information. When the cloud server receives target identification information (e.g., a facial image) from a target subject, the cloud server may transmit target image data corresponding to the target identification information to the processing device 120 according to the mapping relationship if the identity of the target subject is authenticated, thus improving the safety of the storage and transmission of the target image data and realizing an effective protection of the privacy of the target subject.

FIG. 14 is a flowchart illustrating an exemplary process for retrieving target image data from a storage device according to some embodiments of the present disclosure. In some embodiments, the storage device may be implemented in a cloud server. In some embodiments, at least a portion of the process 1400 may be performed by the cloud server.

In 1410, the cloud server may receive an access request including target feature information of a target subject.

The cloud server may receive the access request from the processing device 120. The access request may be a request to access the cloud server to retrieve target image data stored in the storage device. The access request may include the target feature information (e.g., feature information of one or more facial images) of the target subject.

In 1420, the cloud server may identify target image data corresponding to the target feature information.

In some embodiments, the cloud server may determine at least one image (e.g., facial image) of the target subject based on the target feature information. The cloud server may identify the target image data corresponding to the at least one image of the target subject (i.e., target identification information) based on the mapping relationship between the image data and the identification information.

In 1430, the cloud server may transmit the target image data to the processing device 120.

In some embodiments, the cloud server may authenticate the identity of the target subject according to the target facial feature information included in the access request. After the identity authentication is passed, the cloud server may transmit the target image data to the processing device 120, which improves the safety of the storage and transmission of the target image data and realizes an effective protection of the privacy of the target subject.

In some embodiments, if there is not target image data corresponding to the target facial feature information, the cloud server may transmit an error message to the processing device 120. The error message may indicate that the identity of the target subject is illegal, or the storage device does not include the target image data corresponding to the target facial feature information.

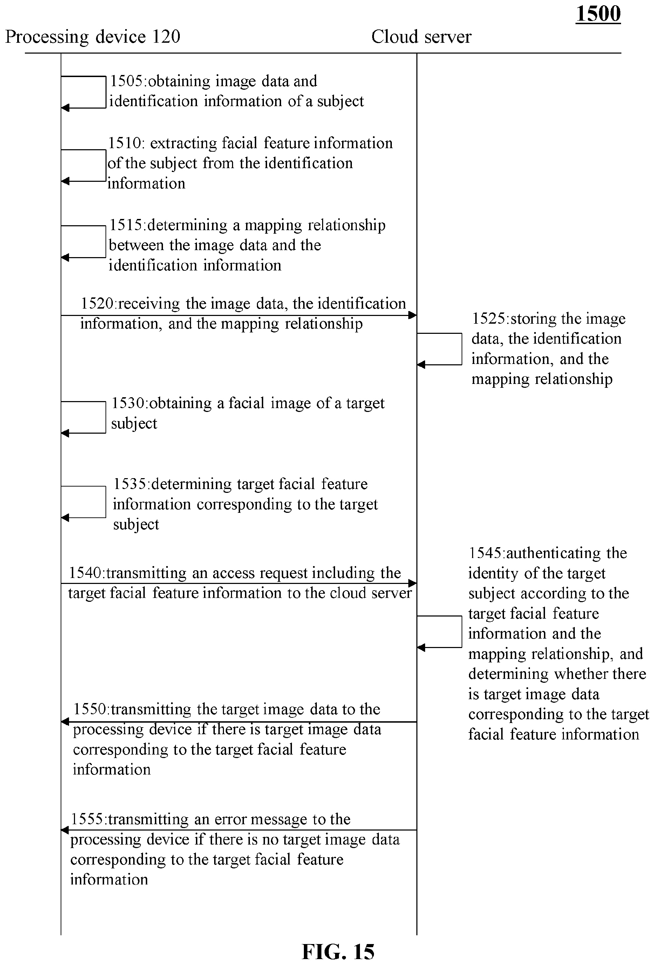

FIG. 15 is a flowchart illustrating an exemplary process for managing image data according to some embodiments of the present disclosure. In some embodiments, the operations 1505 through 1555 of the process 1500 may be similar to or the same as the operations described in the processes 900-1400 as illustrated in FIGs. 9-14, which are not repeated here.

In 1505, the processing device 120 may obtain image data and identification information of a subject.

In 1510, the processing device 120 may extract facial feature information of the subject from the identification information.

In 1515, the processing device 120 may determine a mapping relationship between the image data and the identification information by combining the image data with the facial feature information of the subject.

In 1520, the cloud server may receive the image data, the identification information, and the mapping relationship.

In 1525, the cloud server may store the image data, the identification information, and the mapping relationship.

In 1530, the processing device 120 may obtain a facial image of a target subject.

In 1535, the processing device 120 may determine target facial feature information corresponding to the target subject.

In 1540, the processing device 120 may transmit an access request including the target facial feature information to the cloud server.

In 1545, the cloud server may authenticate the identity of the target subject according to the target facial feature information and the mapping relationship, and determine whether there is target image data corresponding to the target facial feature information.

In 1550, the cloud server may transmit the target image data to the processing device if there is target image data corresponding to the target facial feature information.

In 1555, the cloud server may transmit an error message to the processing device if there is no target image data corresponding to the target facial feature information.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

## Claims

1. A method implemented on a computing device having a processor and a computer-readable storage device, the method comprising:
obtaining, from a storage device, encrypted image data of a target subject and a key box associated with the encrypted image data, the key box being separated from the encrypted image data;
transmitting the key box to an authenticated terminal device;
receiving a master key from the authenticated terminal device, the master key being extracted from the key box on the authenticated terminal device; and
generating target image data of the target subject by decrypting the encrypted image data using the master key.

2. The method of claim 1, further including:
obtaining the encrypted image data and the key box from an imaging device; and
storing the encrypted image data and the key box in the storage device.

3. The method of claim 2, wherein the encrypted image data is generated by encrypting, using the master key, image data of the target subject on the imaging device.

4. The method of any one of claims 1-3, further including:
generating a key pair according to an encryption algorithm, the key pair including a public key and a private key, wherein
the key box is generated by encrypting the master key using the public key, and
the master key is extracted from the key box on the authenticated terminal device using the private key.

5. The method of claim 4, wherein the public key is associated with registration information of the authenticated terminal device.

6. A method implemented on a computing device having a processor and a computer-readable storage device, the method comprising:
obtaining image data and identification information of a subject;
determining a mapping relationship between the image data and the identification information; and
storing, in a storage device, the image data, the identification information, and the mapping relationship.

7. The method of claim 6, wherein the identification information of the subject includes one or more facial images of the subject.

8. The method of claim 7, wherein the one or more facial images of the subject are acquired during a time period of a scan for generating the image data.

9. The method of any one of claims 6-8, wherein the determining a mapping relationship between the image data and the identification information includes:
extracting feature information of the subject from the identification information; and
determining the mapping relationship between the image data and the identification information by combining the feature information with the image data.

10. The method of claim 9, wherein the determining the mapping relationship between the image data and the identification information by combining the feature information with the image data includes:
generating at least one key based on the feature information;
generating at least one value based on the image data;
determining a second mapping relationship between the at least one key and the at least one value; and
designating the second mapping relationship as the mapping relationship between the image data and the identification information.

11. The method of any one of claims 6-10, further including:
encrypting the image data of the subject using the identification information of the subject.

12. The method of claim 11, further including:
receiving an access request and target feature information extracted from target identification information;
determining, in response to the access request, whether the target feature information matches the feature information of the subject; and
retrieving, in response to determining that the target feature information matches the feature information of the subject, the image data of the subject from the storage device based on the feature information of the subject and the mapping relationship between the image data and the identification information.

13. The method of claim 12, further including:
decrypting the retrieved image data of the subject using the target identification information.

14. A system, comprising:
at least one storage device including a set of instructions; and
at least one processor configured to communicate with the at least one storage device, wherein the set of instructions, when executed by the processor, cause the at least one processor to perform operations including:
obtaining, from a storage device, encrypted image data of a target subject and a key box associated with the encrypted image data, the key box being separated from the encrypted image data;
transmitting the key box to an authenticated terminal device;
receiving a master key from the authenticated terminal device, the master key being extracted from the key box on the authenticated terminal device; and
generating target image data of the target subject by decrypting the encrypted image data using the master key.

15. A system, comprising:
at least one storage device including a set of instructions; and
at least one processor configured to communicate with the at least one storage device, wherein the set of instructions, when executed by the processor, cause the at least one processor to perform operations including:
obtaining image data and identification information of a subject;
determining a mapping relationship between the image data and the identification information; and
storing, in a storage device, the image data, the identification information, and the mapping relationship.
